**Europäisches Patentamt**

**European Patent Office**

**Office européen des brevets**

(19)

(11) Numéro de publication: **0 188 973**
**B1**

(12)

# FASCICULE DE BREVET EUROPEEN

(45) Date de publication du fascicule du brevet:
**12.07.89**

(51) Int. Cl.⁴: **G01T 7/04,** G01T 1/178,
G01T 1/164

(21) Numéro de dépôt: **85402638.2**

(22) Date de dépôt: **26.12.85**

(54) **Dispositif de localisation à distance de sources radioactives.**

(30) Priorité: **04.01.85 FR 8500088**
**09.01.85 FR 8500249**

(43) Date de publication de la demande:
**30.07.86 Bulletin 86/31**

(45) Mention de la délivrance du brevet:
**12.07.89 Bulletin 89/28**

(84) Etats contractants désignés:
**BE CH DE GB IT LI**

(56) Documents cités:
**EP-A- 0 072 279**
**US-A- 3 086 116**
**US-A- 3 107 276**
**US-A- 3 225 193**
**US-A- 3 339 070**

(73) Titulaire: **COMMISSARIAT A L'ENERGIE ATOMIQUE,**
**31/33, rue de la Fédération, F-75015 Paris(FR)**

(72) Inventeur: **Lannes, André, 8 rue du Général Galliéni,**
**F-78220 Viroflay(FR)**

(74) Mandataire: **Mongrédien, André et al, c/o**
**BREVATOME 25, rue de Ponthieu, F-75008 Paris(FR)**

ACTORUM AG

## Description

La présente invention a pour objet un dispositif pour la localisation à distance de sources radioactives.

Dans une zone à risques radioactifs, il est parfois nécessaire de rechercher et de localiser les sources radioactives. On essaie alors de dresser une "carte" de l'activité gamma de la zone à surveiller en essayant d'opérer à distance et donc de diminuer les risques de contamination des opérateurs.

Actuellement, un dispositif de localisation à distance de sources radioactives émettrices gamma comprend notamment un détecteur de rayons gamma, un capteur de distance et une caméra vidéo. Ce dispositif se déplace sur des rails et peut être dirigé selon des angles limités vers les sources à localiser. Un ordinateur convertit les signaux émis par le détecteur de rayons gamma et le capteur de distance en plages colorées sur un écran de contrôle. Une première image montrant l'intensité et la distribution des rayons gamma émis par les sources radioactives est ainsi construite point par point. On superpose à cette première image, une seconde image provenant de la caméra vidéo pour permettre la localisation des sources en fonction de leur intensité dans la zone à surveiller.

Un tel dispositif est difficile à transporter et à mettre en oeuvre à cause de son poids, sa complexité et sa fragilité, le détecteur et la caméra devant être manipulés avec soin. Il est donc mal adapté à une utilisation en tant qu'appareil de surveillance d'installations nucléaires, où des sources radioactives peuvent apparaître dans des endroits quelconques. Le temps d'obtention de la première image est très long ; il est donc difficile d'obtenir rapidement plusieurs clichés. De par sa complexité, ce dispositif est très coûteux, ce qui ne permet pas d'installer un tel appareil à demeure dans chaque zone à surveiller.

Par ailleurs, le brevet américain n° 3 107 276 décrit un appareil pour la localisation de sources radioactives conçu pour être aéroporté et comprenant une chambre à sténopé construite dans un matériau de blindage. Cette chambre est pourvue d'un convertisseur à scintillation associé à un tube cathodique qui transforme l'image focalisée par le sténopé en signaux électroniques en vue de leur télétransmission. Une caméra vidéo indépendante permet la visualisation de l'espace à contrôler. Dans un tel appareil, la superposition de l'image vidéo avec l'image des sources radioactives est très délicate à obtenir avec précision. De plus, l'appareil est encombrant, de fabrication et d'utilisation coûteuses et peu adapté à une utilisation à l'intérieur d'un bâtiment.

La présente invention a justement pour objet un dispositif pour la localisation à distance de sources radioactives permettant de pallier les inconvénients précédemment mentionnés.

De façon plus précise, l'invention comprend une chambre à sténopé dont les parois constituent un blindage pour des rayonnements radioactifs. Cette chambre à sténopé comporte une ouverture permettant d'introduire un premier film apte à détecter des rayonnements radioactifs émis par lesdites sources et disposé en face du sténopé. De préférence la chambre à sténopé comporte en outre un bouchon constituant un blindage pour les rayonnements radioactifs provenant éventuellement de l'arrière et servant à fermer ladite ouverture lors du fonctionnement du dispositif.

De façon avantageuse, un second film sensible à la lumière est disposé dans la chambre à sténopé sensiblement au même endroit que le premier film, de manière à être impressionné par la lumière pénétrant par le sténopé.

De préférence, la chambre à sténopé est munie d'un collimateur délimité par un cône dont la partie la plus étroite constitue le sténopé et dont l'ouverture définit le champ de prise de vues. Il est préférable de disposer l'orifice le plus étroit du côté de l'entrée des rayonnements de manière à ce que l'on puisse rapprocher le plus possible le film sensible aux rayonnements radioactifs de cette entrée, ce qui conduit à diminuer le volume total. Dans une réalisation optimisée, ce sténopé est délimité par un double cône (deux cônes de même ouverture opposés par le sommet) ce qui conduit à diminuer le volume total du matériau de blindage. De préférence d'autre part, ce sténopé constitue un double diaphragme, un petit diaphragme permettant le passage des rayonnements radioactifs et de la lumière et un grand diaphragme permettant seulement le passage des rayonnements radioactifs. Le petit diaphragme est formé par un trou de petit diamètre percé dans une matière perméable aux rayonnements radioactifs et étanche à la lumière, cette matière étant disposée dans un trou de plus grand diamètre percé dans les parois de ladite chambre, ce trou formant ledit grand diaphragme.

Avantageusement, un troisième film apte à détecter les rayonnements radioactifs est disposé dans la chambre à sténopé de manière à être impressionné par les rayonnements radioactifs pénétrant par le sténopé, ce troisième film étant séparé du premier film par un écran absorbant.

Commodément un convertisseur d'images, apte à transformer les rayonnements radioactifs en une émission photonique permettant d'impressionner un film photographique, est disposé de façon adjacente au premier film, le convertisseur comprenant un faisceau de fibres optiques scintillantes et adjacentes convergeant vers le sténopé de la chambre à sténopé.

Pratiquement, un film sensible à la lumière visible, le film apte à détecter les rayonnements radioactifs, le convertisseur et un réflecteur sont successivement disposés dans la chambre à sténopé, du sténopé vers l'ouverture.

Avantageusement, un film à la fois sensible à la lumière visible et à l'émission photonique correspondant aux rayonnements radioactifs transformés par le convertisseur, le convertisseur et un réflecteur sont successivement disposés dans la chambre à sténopé, du sténopé vers l'ouverture.

D'autres avantages et caractéristiques de l'invention ressortiront plus précisément de la description qui suit, donnée à titre explicatif mais nullement limitatif, en référence aux figures annexées, sur lesquelles :

- la figure 1 représente, en coupe longitudinale, le dispositif de localisation selon un mode préféré de réalisation de l'invention ;
- la figure 2 représente, en coupe, un agrandissement du sténopé ;
- la figure 3 représente, en coupe, un agrandissement de la chambre à films et de la cassette à films ;
- la figure 4 représente, en coupe, la cassette à films selon une variante de réalisation du dispositif selon l'invention ;
- la figure 5 représente, en perspective, une vue schématique d'un convertisseur d'images conformément à l'invention ;
- la figure 6 représente, en perspective, une vue schématique d'une configuration de la chambre à sténopé incluant le convertisseur, et
- la figure 7 représente, schématiquement, une autre configuration de la chambre à sténopé munie du convertisseur.

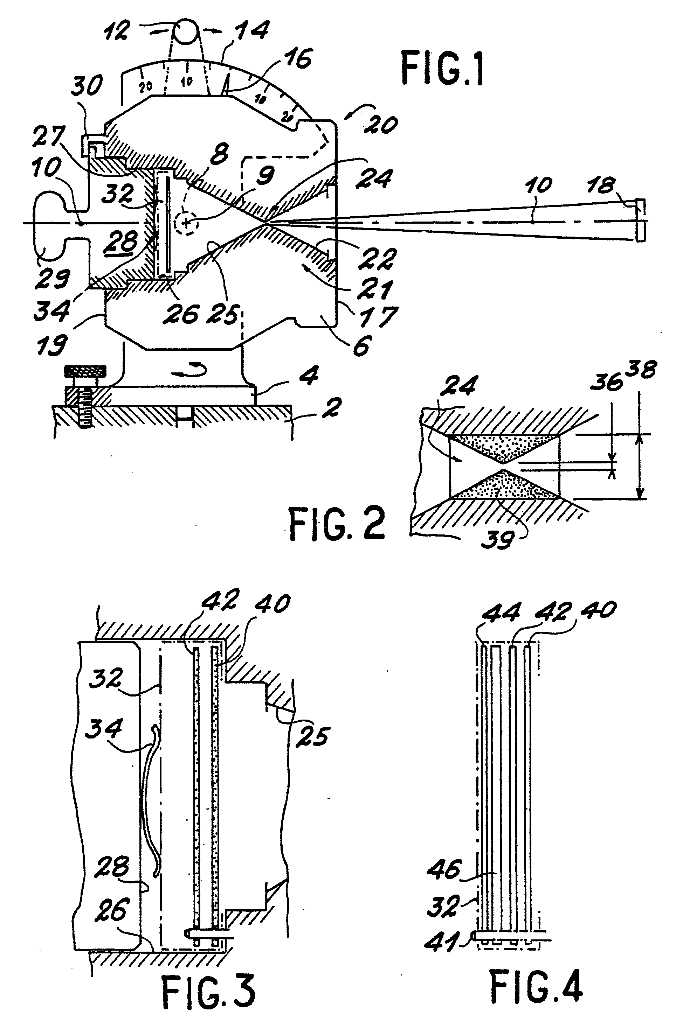

Le dispositif pour la localisation à distance de sources radioactives est représenté sur la figure 1 selon un mode préféré de réalisation de l'invention.

Dans la zone à surveiller, un bâti 2 est disposé à la place voulue pour réaliser les clichés. Ce bâti 2 sera par exemple mobile. Un socle 4 est fixé sur le bâti 2 et sert à soutenir un corps 6 par l'intermédiaire de deux axes 8 horizontaux. Ces deux axes permettent la rotation du corps 6 autour d'un axe géométrique 9 horizontal. Le corps 6 est à symétrie de révolution autour d'un axe 10. Cet axe 10 et l'axe de rotation 9 sont de préférence perpendiculaires.

Le corps 6 est muni sur sa partie supérieure d'une poignée 12 permettant d'orienter facilement le corps 6 autour de l'axe 9. Un disque gradué 14 vertical est fixé sur le socle 4 au niveau d'un des côtés du corps 6. L'axe de révolution du disque gradué 14 est confondu avec l'axe 9. Le corps 6 est muni d'un index 16 permettant de repérer l'orientation dudit corps 6 sur le disque gradué 14. Des moyens de blocage (non représentés) sont disposés de chaque côté du corps au niveau des deux axes 8, pour assurer le blocage du corps en rotation autour dudit axe 9. On peut ainsi orienter le corps 6 et viser les sources radioactives 18, repérer l'orientation du corps 6 par l'index 16 sur le disque gradué 14 et retrouver la même position si par exemple le dispositif a été déplacé.

Dans une variante, le corps 6 n'est pas solidaire d'un bâti et peut être introduit dans la zone à surveiller au bout d'une tige support, passant à travers une ouverture, dans une canalisation ou dans un puits par exemple.

Le corps 6 comprend une face avant 17 destinée à être placée face aux sources à photographier et une face opposée 19, dite face arrière.

Le dispositif selon l'invention comporte une chambre à sténopé 20 dont ledit corps 6 constitue une partie de ses parois constitutives. Ladite chambre comprend un collimateur 21 ; ce dernier est délimité par un cône circulaire 22 dont la base est située sur la face avant 17. Le collimateur 21 est centré sur l'axe 10 du corps 6 et le sommet du cône 22 constitue le sténopé 24. Derrière le sténopé 24, un deuxième cône circulaire 25 est ménagé selon un angle d'ouverture égal à celui du cône 22. Le deuxième cône 25 débouche à sa partie la plus large dans une chambre à films 26 circulaire centrée, ainsi que ce cône, sur l'axe 10. La chambre à films 26 se prolonge jusqu'à la face arrière 19 par une ouverture 27 cylindrique. Cette ouverture 27 est normalement obturée par un bouchon 28 cylindrique. Une poignée 29 et des moyens de blocage 30 permettent d'enfoncer puis de bloquer ce bouchon 28. Le chargement de l'appareil s'effectue en disposant dans ladite chambre à films 26 une cassette à films 32. Un ressort 34 fixé sur la face intérieure du bouchon 28 permet de plaquer ladite cassette 32 contre un épaulement formé dans la chambre 26.

Les épaisseurs du corps 6 et du bouchon 28 sont telles que ceux-ci constituent un blindage contre des rayonnements radioactifs. Le corps 6 et le bouchon 28 sont formés dans un matériau atténuant très fortement les rayonnements gamma. L'alliage dénal a été choisi de préférence au plomb pour obtenir un volume plus faible donc un poids inférieur. Le dispositif ainsi obtenu est aisément transportable par un homme et peut être amené en tout lieu où une surveillance est désirée.

Pour réaliser une photographie classique de la zone à surveiller, il est nécessaire de distinguer au mieux tous les détails des installations présentes. Or, la netteté est d'autant meilleure que le trou ou sténopé 24 est petit. Donc, le diamètre du sténopé 24 est de préférence petit (par exemple de l'ordre de un dixième de mm) ; on pourra toujours adapter la luminosité de la zone à surveiller en fonction de ce diamètre et en fonction de la sensibilité du film utilisé. En revanche, une insuffisance de l'intensité gamma des sources radioactives à localiser ne peut pas être augmentée artificiellement comme pour la lumière.

Pour résoudre ce problème, on réalise le sténopé 24 de la manière représentée sur la figure 2. On réalise d'abord dans le corps 6 un trou dont le diamètre 38 correspond à l'optimisation, sur le cliché correspondant, de la tache représentative d'une source radioactive quelle que soit l'énergie du rayonnement (par exemple de l'ordre de 0,5mm). On colmate ensuite ce trou avec un matériau léger 39 du type résine polyester perméable aux rayonnements radioactifs et étanche à la lumière. Enfin, on perce dans ce matériau un trou de petit diamètre 36. On réalise ainsi un sténopé à double diaphragme : le petit diaphragme correspond au sténopé pour l'obtention de photos satisfaisantes des installations présentes dans la zone à surveiller et le grand diaphragme correspond au sténopé pour l'obtention d'une tache suffisante pour localiser les sources radioactives.

La cassette à films 32 peut contenir un à trois films superposés. Selon les clichés demandés, on dispose les films de la manière suivante :

Tout d'abord, pour localiser les sources radioactives dans la zone à surveiller, on réalise par exemple deux clichés avec une cassette à films contenant à chaque cliché un seul film. Le premier cliché est obtenu avec un premier film 42 apte à détecter les rayonnements radioactifs des sources radioactives à localiser. Le second cliché est obtenu avec un second film 40 sensible à la lumière visible et destiné à photographier classiquement la zone. Le second film 40 est placé dans la cassette sensiblement au même endroit que le premier film 42. Trois ergots tels que 41 permettent de déterminer sans erreur possible le placement des films dans la cassette à films 32 et permettent ainsi une superposition rigoureuse des deux clichés ultérieurement.

Dans ce cas, on essaie de prendre deux clichés selon le même point d'observation et selon un même angle de vue correspondant à la position de l'index 16 sur le disque gradué 14. Il est évident que le temps de manipulation est relativement long, que des erreurs de positionnement sont possibles et que l'opérateur est obligé de manipuler dans une zone radioactive pour recharger le dispositif, ce qui comporte des risques.

Donc, selon un mode préféré de réalisation de l'invention, représenté partiellement sur la figure 3, on réalise simultanément les deux clichés avec une cassette à films contenant les deux films 40 et 42 superposés, le film 40 transparent aux rayonnements gamma et qui ne leur est pas sensible étant disposé devant le film 42. On a ainsi l'assurance d'une bonne correspondance de position des deux films et d'une manipulation aisée et rapide.

Une fois les films 40, 42 traités, leur superposition permet de distinguer des taches correspondant à des sources radioactives sur les installations photographiées. On localise ainsi les éléments faisant l'objet d'une activité radioactive. La densité optique et l'etendue des taches permettent de déterminer la valeur de l'intensité de l'activité radioactive.

Un traitement informatique des deux images permet la superposition des deux clichés en un seul, identifiant directement les sources radioactives. Un autre traitement informatique de l'image des sources radioactives permet, moyennant un étalonnage, de réaliser une dosimétrie approchée. La présentation des résultats s'effectue préférentiellement sous la forme de plages colorées, selon des techniques classiques.

Il peut aussi être intéressant de déterminer, par leur énergie, la nature des matériaux constituant les sources radioactives. On utilise à cet effet une cassette à trois films représentée sur la figure 4. Ces trois films comprennent les films 40 et 42, ainsi qu'un troisième film 44 apte à détecter des rayonnements radioactifs et séparé du premier film 42 par un écran absorbant 46, le second film 40 étant toujours disposé devant le premier film 42. Par comparaison des densités optiques des taches correspondant aux sources radioactives, reçues respectivement par les deux films 42 et 44, on peut alors identifier la nature de certaines des sources radioactives : une courbe donne directement, pour un absorbant donné et une épaisseur d'écran donnée, l'énergie correspondant à un rapport donné des intensités, mesurées par les densités optiques.

Dans certains cas, il peut être avantageux de disposer dans la chambre à sténopé un convertisseur d'images. Celui-ci est placé, par exemple, de façon adjacente au premier film apte à détecter les rayonnements radioactifs. Il permet de convertir les rayonnements radioactifs en une émission photonique apte à impressionner le premier film.

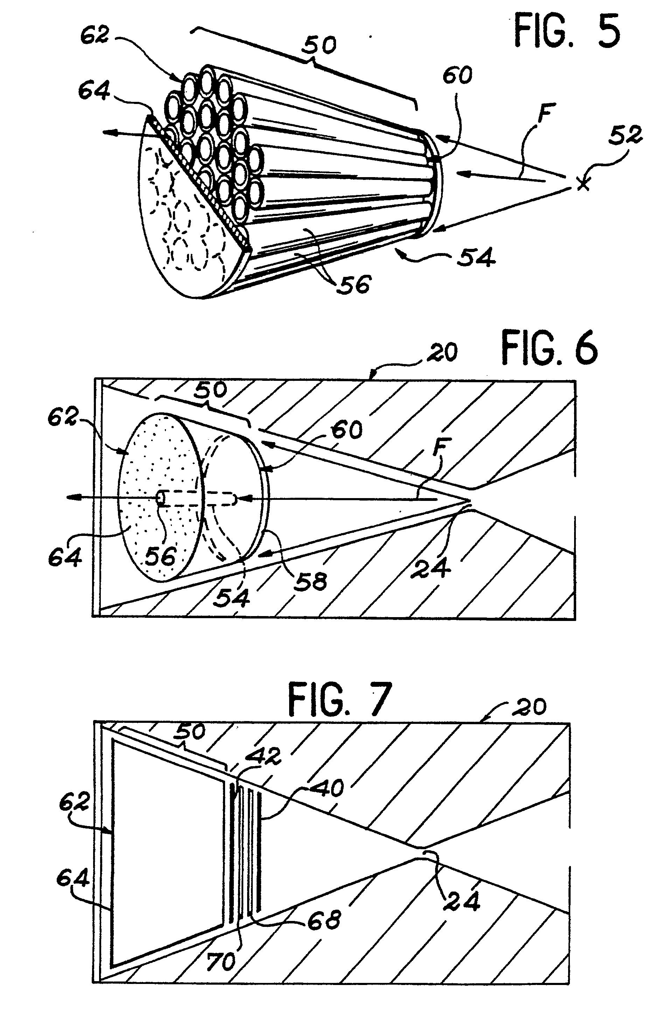

Un convertisseur d'images selon l'invention est représenté sur la figure 5. Ce convertisseur, portant la référence générale 50, permet de convertir une répartition spatiale d'un rayonnement ionisant, par exemple un rayonnement gamma, dont le trajet est schématisé par les flèches F, en une image visible ainsi que de transmettre cette image.

Ce rayonnement gamma provient par exemple d'une source ponctuelle 52 constituée par l'image virtuelle des sources radioactives 18 produite par le sténopé 24.

Ce convertisseur d'images 2 est constitué par un faisceau 54 de fibres optiques 56, scintillantes et adjacentes, pouvant être réalisées soit en verre, soit en matière plastique. Ces fibres optiques 56 sont toutes orientées suivant une direction coïncidant géométriquement avec le trajet, représenté par les flèches F, du rayonnement gamma provenant de la source 52. Elles convergent donc vers un même point constitué par la source ponctuelle 52.

Comme représenté sur la figure 6, l'image du rayonnement gamma à détecter entrant par le sténopé 24 de la chambre 20 peut être obtenue sur un film photographique 58 disposé sur la face extrême 60 du faisceau 54 de fibres optiques 56 située en regard du sténopé 24. Ce film 58 est à la fois sensible à la lumière visible et à l'émission photonique correspondant aux rayonnements radioactifs des sources radioactives à détecter transformés par le convertisseur. L'autre face extrême 62 du faisceau est munie d'un réflecteur 64 (constitué par exemple par un dépôt d'aluminium) servant à réfléchir l'image fournie par le convertisseur vers le film photographique 58.

La position avant du film 58 permet d'utiliser simultanément la chambre à sténopé pour obtenir une image classique en lumière visible de l'espace à contrôler. L'image de l'espace à contrôler et l'image des rayonnements se superposent sur le film, permettant ainsi de repérer aisément les sources radioactives.

Si l'on désire conserver les deux images sur deux films séparés tout en utilisant le convertisseur d'images 50, on peut adopter par exemple la configuration représentée sur la figure 7.

Le convertisseur d'images 50 est disposé comme précédemment en face du sténopé 24 de la chambre 20. Sont disposés successivement, du sténopé 24 vers le convertisseur 50, le film 40 sensible à la lumière visible, un écran plastique noir 68, un réflecteur en aluminium poli 70 et le film 42 apte à détecter les rayonnements gamma.

L'écran 68 et le réflecteur 70 permettent de bien séparer les images en absorbant les rayonnements rétrodiffusés.

La face 62 du convertisseur 50 est munie du réflecteur 64.

Bien entendu, le description ci-dessus n'a été donnée qu'à titre d'exemple, toutes modifications dans les formes de réalisation pouvant être envisagées sans modifier le principe fondamental de l'invention.

Par exemple, l'angle d'ouverture du collimateur 22 est donné à titre d'exemple sur la figure 1. On peut adapter une bague à l'entrée de ce collimateur au niveau de la face avant 17 du corps 6, si l'on souhaite réduire cet angle d'ouverture. La forme du corps 6 est conçue de manière à ce que les épaisseurs des parois soient suffisantes pour constituer un blindage aux rayonnements radioactifs. On optimise cette forme pour rendre le dispositif léger et portable.

D'autre part, le bouchon 28 n'est pas strictement indispensable dans le cas où l'utilisateur est certain qu'aucun rayonnement radioactif en provenance de l'arrière ne peut impressionner le film sensible 42. Par ailleurs, l'introduction du film peut éventuellement s'effectuer par une fente latérale, que l'on obture de préférence par un bouchon de forme appropriée.

Le collimateur peut être délimité par un cône simple dont l'orifice le plus étroit est alors de préférence disposé du côté de l'entrée des rayonnements : on peut ainsi rapprocher le film sensible aux rayonnements radioactifs le plus possible de l'entrée ce qui permet de diminuer le volume donc le poids.

Enfin, la disposition des films peut être modifiée suivant les utilisations et suivant les caractéristiques des films utilisés. On peut par exemple utiliser la configuration de la figure 7 en rajoutant un autre film pour les rayonnements gamma entre le convertisseur 50 et le réflecteur 64. Ce film sera l'équivalent dudit troisième film permettant une comparaison des densités optiques.

## Revendications

1. Dispositif pour la localisation à distance de sources radioactives, comprenant une chambre à sténopé (20) dont les parois constituent un blindage pour des rayonnements radioactifs, caractérisé en ce que ladite chambre à sténopé (20) comporte une ouverture (27) permettant d'introduire un premier film (42) apte à détecter des rayonnements radioactifs émis par lesdites sources et disposé en face du sténopé (24) et en ce qu'un second film (40) sensible à la lumière est disposé dans la chambre à sténopé (20) sensiblement au même endroit que le premier film, de manière à être impressionné par la lumière pénétrant par le sténopé (24).

2. Dispositif de localisation selon la revendication 1, caractérisé en ce que ladite chambre à sténopé comporte en outre un bouchon (28) constituant un blindage pour les rayonnements radioactifs et servant à fermer ladite ouverture (27) lors du fonctionnement du dispositif.

3. Dispositif de localisation selon la revendication 1, caractérisé en ce que la chambre à sténopé (20) est munie d'un collimateur (22) délimité par un cône dont la partie la plus étroite constitue la sténopé (24).

4. Dispositif de localisation selon la revendication 1, caractérisé en ce que la chambre à sténopé (20) est munie d'un collimateur (22) délimité par un double cône formé de deux cônes de même ouverture opposés par le sommet constituant le sténopé (24).

5. Dispositif de localisation selon l'une quelconque des revendications 1 à 4, caractérisé en ce que le sténopé (24) constitue un double diaphragme, un petit diaphragme permettant le passage des rayonnements radioactifs et de la lumière, un grand diaphragme permettant seulement le passage des rayonnements radioactifs.

6. Dispositif de localisation selon la revendication 5, caractérisé en ce que ledit petit diaphragme est formé par un trou de petit diamètre (36) percé dans une matière (39) perméable aux rayonnements radioactifs et étanche à la lumière, cette matière (39) étant disposée dans un trou de plus grand diamètre (38) percé dans les parois de ladite chambre (20), ce trou formant ledit grand diaphragme.

7. Dispositif de localisation selon l'une quelconque des revendications 1 à 6, caractérisé en ce qu'un troisième film (44) apte à détecter des rayonnements radioactifs est disposé dans la chambre à sténopé (20) de manière à être impressionné par les rayonnements radioactifs pénétrant par le sténopé (24), ce troisième film (44) étant séparé du premier film (42) par un écran absorbant (46).

8. Dispositif de localisation selon la revendication 1, caractérisé en ce qu'un convertisseur d'images (50), apte à transformer les rayonnements radioactifs en une émission photonique permettant d'impressionner un film photographique, est disposé de façon adjacente au premier film (42), le convertisseur comprenant un faisceau (54) de fibres optiques (56) scintillantes et adjacentes convergeant vers le sténopé (24) de la chambre à sténopé (20).

9. Dispositif de localisation selon la revendications 8, caractérisé en ce qu'un film (40) sensible à la lumière visible, le film (42) apte à détecter les rayonnements radioiactifs, le convertisseur (50) et un réflecteur (64) sont successivement disposés dans la chambre (20) à sténopé, du sténopé (24) vers l'ouverture (27).

10. Dispositif de localisation selon la revendication 8, caractérisé en ce qu'un film (58) à la fois sensible à la lumière visible et à l'émission photonique correspondant aux rayonnements radiioactifs transformés par le convertisseur (50), le convertisseur (50) et un réflecteur (64) sont successivement disposés dans la chambre (20) à sténopé, du sténopé (24) vers l'ouverture (27).

## Patentansprüche

1. Vorrichtung zur Lokalisierung radioaktiver Strahler aus der Ferne, bestehend aus einer Kammer mit Lochblende (20), deren Wände eine Abschirmung gegen radioaktive Strahlen darstellen, dadurch gekennzeichnet, daß die genannte Kammer mit Lochblende (20) eine Öffnung (27) aufweist, die das Einführen eines ersten zum Nachweis der von den genannten Strahlern ausgesandten radioaktiven Strahlen geeigneten und der Lochblende (24) gegenüber angeordneten Films (42) erlaubt und dadurch, daß ein zweiter, lichtempfindlicher Film (40) in der Kammer mit Lochblende (20) im wesentlichen an derselben Stelle, wie der erste Film angeordnet ist, so daß er durch das durch die Lochblende (24) einfallende Licht belichtet wird.

2. Lokalisierungsvorrichtung nach Patentanspruch 1, dadurch gekennzeichnet, daß die genannte Kammer mit Lochblende darüber hinaus einen für radioaktive Strahlen eine Abschirmung bildenden und zum Verschließen der genannten Öffnung (27) beim Betreiben der Vorrichtung dienenden Stopfen (28) aufweist.

3. Lokalisierungsvorrichtung nach Patentanspruch 1, dadurch gekennzeichnet, daß die Kammer mit Lochblende (20) einen durch einen Kegel begrenzten Kollimator (22) aufweist, dessen engste Stelle die Lochblende (24) bildet.

4. Lokalisierungsvorrichtung nach Patentanspruch 1, dadurch gekennzeichnet, daß die Kammer mit Lochblende (20) einen durch einen aus zwei Kegeln gleichen Öffnungswinkels mit gegeneinander gerichteten, die Lochblende (24) bildenden Spitzen geformten Doppelkegel begrenzten Kollimator (22) aufweist.

5. Lokalisierungsvorrichtung nach irgendeinem der Patentansprüche 1 bis 4, dadurch gekennzeichnet, daß die Lochblende (24) eine doppelte Blende darstellt, und zwar eine kleine Blende zum Durchlassen von radioaktiven Strahlen und Licht und eine große Blende zum Durchlassen lediglich der radioaktiven Strahlen.

6. Lokalisierungsvorrichtung nach Patentanspruch 5, dadurch gekennzeichnet, daß die kleine Blende aus einem Loch kleinen Durchmessers (36) in einem für radioaktive Strahlen durchlässigen und lichtundurchlässigen Material (39) besteht, wobei dieses Material in einem Loch größeren Durchmessers (38) in der Wandung der genannten Kammer (20) angeordnet ist, das die genannte große Blende bildet.

7. Lokalisierungsvorrichtung nach irgendeinem der Patentansprüche 1 bis 6, dadurch gekennzeichnet, daß ein dritter zum Nachweis radioaktiver Strahlen geeigneter Film (44) in der Kammer mit Lochblende (20) derart angeordnet ist, daß er von den durch die Lochblende (24) einfallenden, radioaktiven Strahlen belichtet wird, wobei dieser dritte Film (44) vom ersten Film (42) durch einen absorbierenden Schirm (46) getrennt wird.

8. Lokalisierungsvorrichtung nach Patentanspruch 1, dadurch gekennzeichnet, daß ein zur Umwandlung radioaktiver Strahlen in eine zur Belichtung eines photographischen Films fähige Photonenemission geeigneter Bildumformer (50) anschließend an den ersten Film (42) angeordnet ist, wobei der Bildumformer aus einem in Richtung der Lochblende (24) der Kammer mit Lochblende (20) konvergierenden Bündel (54) szintillierender und anliegender Lichtleitfasern (56) besteht.

9. Lokalisierungsvorrichtung nach Patentanspruch 8, dadurch gekennzeichnet, daß ein für das sichtbare Licht empfindlicher Film (40), der zum Nachweis radioaktiver Strahlen geeignete Film (42), der Bildumformer (50) und ein Reflektor (64) in der Kammer (20) mit Lochblende in Richtung von der Lochblende (24) zur Öffnung (27) aufeinanderfolgend angeordnet sind.

10. Lokalisierungsvorrichtung nach Patentanspruch 8, dadurch gekennzeichnet, daß ein für sichtbares Licht ebenso, wie für die den durch den Bildumformer (50) umgewandelten radioaktiven Strahlen entsprechenden Photonenemissionen empfindlicher Film, der Bildumformer (50) und ein Reflektor (64) in der Kammer (20) mit Lochblende in Richtung von er Lochblende (24) zur Öffnung (27) aufeinanderfolgend angeordnet sind.

**Claims**

1. Apparatus for the remote localization of radioactive sources, comprising a pinhole camera (20), whose walls constitute a shield for the radioactive radiation, characterized in that said pinhole camera (20) has an opening (27) making it possible to introduce a first film (42) able to detect the radioactive radiation emitted by said sources and positioned facing the pinhole (20) and in that a second light-sensitive film (40) is placed in the pinhole camera (20) substantially at the same location as the first film, so that it is exposed by the light entering via the pinhole (24).

2. Localization apparatus according to claim 1, characterized in that the pinhole camera (20) also has a plug (28) constituting a shield for the radioactive radiation and used for closing said opening (27) during the operation of the apparatus.

3. Localization apparatus according to claim 1, characterized in that the pinhole camera (20) is provided with a collimator (22) defined by a cone, whereof the narrowest part constitutes the pinhole (24).

4. Localization apparatus according to claim 1, characterized in that the pinhole camera (20) is provided with a collimator (22) defined by a double cone formed from two cones with the same opening apposed by the apex constituting the pinhole (24).

5. Localization apparatus according to one of the claims 1 to 4, characterized in that the pinhole (24) constitutes a double diaphragm, a small diaphragm permitting the passage of radioactive radiation and light and a large diaphragm only permitting the passage of radioactive radiation.

6. Localization apparatus according to claim 5, characterized in that the small diaphragm is formed by a small diameter hole (36) made in a material (39) which is permeable to radioactive radiation and light-proof, said material (39) being located in a larger diameter hole (38) made in the walls of the camera (20), said hole forming said large diaphragm.

7. Localization apparatus according to any one of the claims 1 to 6, characterized in that a third film (44) able to detect radioactive radiation is located in the pinhole camera (20), so that it can be exposed by the radioactive radiation entering via the pinhole (24), said third film (44) being separated from the first film (42) by an absorbent screen (46).

8. Localization apparatus according to claim 1, characterized in that an image converter (50), able to convert the radioactive radiation into a photon emission making it possible to expose a photographic film, is positioned adjacent to the first film (42), the converter incorporating a bundle (54) of adjacent scintillating optical fibres (56) converging towards the pinhole (24) of the pinhole camera (20).

9. Localization apparatus according to claim 8, characterized in that a visible light-sensitive film (40), the film (42) able to detect radioactive radiation, the converter (50) and a reflector (64) are successively arranged in the pinhole camera (20), from the pinhole (24) to the opening.

10. Localization apparatus according to claim 8, characterized in that a film (58) sensitive both to visible light and the photon emission corresponding to the radioactive radiation converted by the converter (50), the converter (50) and a reflector (64) are successively disposed in the pinhole camera (20), from the pinhole (24) to the opening (27).

FIG.1

FIG. 2

FIG.3

FIG.4

FIG. 5

FIG. 6

FIG. 7